# EUROPEAN PATENT SPECIFICATION

(11) **EP 2 778 245 B1**
(45) Date of publication and mention of the grant of the patent: **24.04.2019**
(21) Application number: 12848485.4
(22) Date of filing: 06.11.2012
(51) Int. Cl.: C22C 38/00, B21B 3/02, C22C 38/04, C22C 38/60, H01F 1/16, C21D 8/12, C21D 1/74, C21D 1/76, C21D 6/00, C21D 9/46, C23C 10/08, C22C 38/02, C22C 38/06, C22C 38/12

(54) **ULTRATHIN ELECTROMAGNETIC STEEL SHEET**
ULTRADÜNNES ELEKTROMAGNETISCHES STAHLBLECH
TÔLE D'ACIER ÉLECTROMAGNÉTIQUE ULTRA-FINE

(30) Priority: 09.11.2011 JP 2011245819; 27.06.2012 JP 2012143991
(43) Date of publication of application: 17.09.2014
(73) Proprietor: JFE Steel Corporation, Tokyo, 100-0011 (JP)
(72) Inventor: IMAMURA, Takeshi, Tokyo 100-0011 (JP); TAKASHIMA, Minoru, Tokyo 100-0011 (JP); HIRATANI, Tatsuhiko, Tokyo 100-0011 (JP)
(74) Representative: Grünecker Patent- und Rechtsanwälte PartG mbB
(86) International application number: PCT/JP2012/007107
(87) International publication number: WO 2013/069259

(56) References cited:
- EP-A1- 0 987 341
- JP-A- H10 219 419
- JP-A- H10 219 419
- JP-A- H11 199 988
- JP-A- H11 209 852
- JP-A- H11 293 421
- JP-A- H11 293 449
- JP-A- 2001 279 403
- JP-A- 2009 263 782
- US-A- 5 089 061

## Description

### TECHNICAL FIELD

The present invention relates to an ultrathin electromagnetic steel sheet, called also as an ultra-thin electrical steel sheet, hereinafter, which can be suitably applied to a reactor as inductance element, etc.

### BACKGROUND ART

It is generally known that iron loss of electrical steel sheets drastically increases as the excitation frequency becomes higher. Actually, however, the driving frequency of transformer or reactor is steadily increased in order to achieve miniaturization of the iron core and/or improvement in the efficiency. As such, the problem of heat generation due to increased iron loss of the electrical steel sheets became more apparent.

In order to reduce the iron loss of electrical steel sheets, it is known as an effective method to increase the Si content and thereby enhance the specific resistance. However, if the Si content in the steel sheets exceeds 3.5 mass%, the workability deteriorates significantly, making it difficult to manufacture steel sheets with high Si content, by means of rolling process, which had been applied to manufacture conventional electrical steel sheets.

In view of the above, various methods were developed for obtaining steel sheets with high Si content. For instance, Patent Literature 1 (JPH 5049745 B) discloses a method wherein an atmospheric gas containing SiCl₄ is blown onto the steel sheets at high temperature within a range of 1023 °C to 1200 °C, for obtaining an electrical steel sheet with high Si content. Further, Patent Literature 2 (JPH 6057853 B) discloses a method for carrying out hot rolling in manufacturing a high Si steel sheet with poor workability due to Si content within a range of 4.5 mass% to 7 mass%. Patent literature 3 (JP2001-279403 A) discloses a non-directional magnetic steel sheet having excellent high frequency magnetic characteristics, comprising 1.5-2.0 mass% of chromium, 2.5-10 mass% of silicon, and 100 ppm or less of carbon and nitrogen. The steel sheet has a specific resistance of 60 µΩ cm, a thickness of 0.01-0.4 mm and a surface average roughness of 0.5 µm or less.

In order to reduce the iron loss, it is effective to decrease the sheet thickness. Among the above-mentioned methods, there is limitation in decreasing the sheet thickness by the method involving hot rolling. Thus, a method utilizing SiCl₄ has been industrialized, which is referred to as "siliconizing treatment".

### CITATION LIST

### Patent Literature

PTL 1: JPH 5049745 B
PTL 2: JPH 6057853 B
PTL 3: JP2001-279403 A

### SUMMARY OF INVENTION

### (Technical Problem)

However, it has been revealed that if the siliconizing treatment is applied to the steel sheets with a thickness reduced for increasing the Si content in the steel, the magnetic property may deteriorate. It has also been revealed that if the steel sheets are used as being stacked each other, as is the case in many instances, the stacking factor may significantly deteriorate.

The present invention has been developed in view of the state of the art as noted above. Specifically, it is an object of the present invention to provide an ultra-thin electrical steel sheet that exhibits excellent iron loss properties whereby the magnetic property is free from deterioration and degradation of the stacking factor can be avoided, even when the steel sheet with a thickness of 0.10 mm (100 µm) or less has been subjected to siliconizing treatment for increasing the Si content in the steel.

### (Solution to Problem)

The present invention has been successfully achieved starting from experiments to be described below.

### <Experiment 1>

Steel slab containing C: 0.0045 %, Si: 3.40 % and Mn: 0.10 %, all by mass%, was subjected to hot rolling for obtaining a hot rolled steel sheet having a sheet thickness of 2.0 mm. The hot rolled steel sheet was then subjected to pickling for removing scale, followed by cold rolling for manufacturing a steel sheet having a final thickness of 0.05 mm. Subsequently, siliconizing treatments were executed at various temperatures within a range of 1000 °C to 1200 °C, and for various times within a range of 100 sec to 1400 sec, under an atmosphere of 10 % SiCl₄ + 90 % N₂. The siliconizing treatment under each condition was carried out so as to achieve a uniform Si content of 6.5 mass% in the sheet thickness direction, based on advance calculation and review. Consequently, the Si content of each sample obtained as above was substantially constant value of about 6.5 mass%.

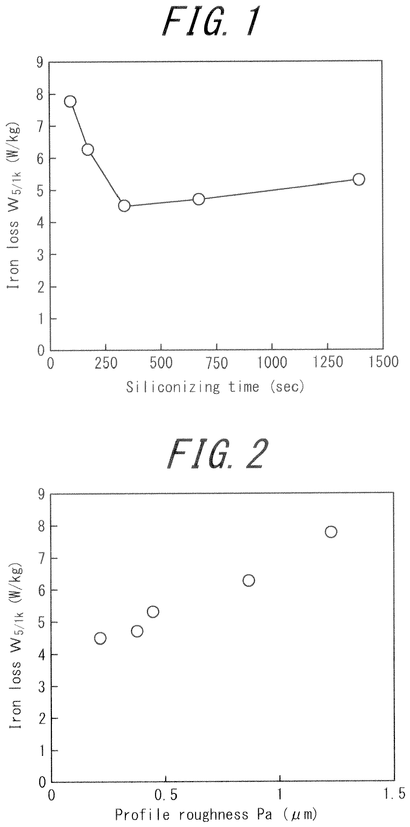

The magnetic property of the samples was measured by the method prescribed by JIS C 2550. Fig. 1 shows the relationship between the siliconizing time and iron loss W_{5/1k} (i.e., an iron loss at magnetic flux density of 0.5T and frequency of 1000 Hz). Based on the measurement results, it has been clarified that the iron loss is reduced by extending the siliconizing time longer than a certain time. Also, the stacking factor of the steel sheets was measured by the method prescribed by JIS C 2550. As a result, it has been found that the stacking factor increases to an excellent degree, as the treatment time (siliconizing time) becomes longer.

As the stacking factor is greatly influenced by the surface roughness of the steel sheet, the surface roughness of each sample was investigated. The surface roughness of the steel sheet was measured by the method prescribed by JIS B 0633 '01. In this instance, a measuring device was used, which included a stylus having a tip radius of 2 µm. Fig. 2 shows the results in relation to the iron loss properties. With reference to Fig. 2, it is clear that the iron loss is lower and better, as the profile roughness Pa is smaller. Here, the term "profile roughness Pa" means an arithmetical mean deviation of the assessed profile (primary profile) prescribed by JIS B 0601 '01.

In general, it is considered that iron loss deteriorates, as surface roughness increases, because the surfaces unevenness prevents movement of the magnetic domain-wall. Thus, in order to investigate whether it is only the surface layer, which plays an influential role, the cross-sectional shape of steel sheets was investigated in detail by means of a laser shape measuring device. As a result, it has been clarified that the unevenness on one side surface substantially corresponds with that on the reverse surface. In other words, samples having a large surface roughness may be regarded as sheets waving minutely as a whole, wherein the unevenness exists not only on one side surface. This is considered to be a phenomenon unique to thin steel sheets that have been subjected to siliconizing treatment.

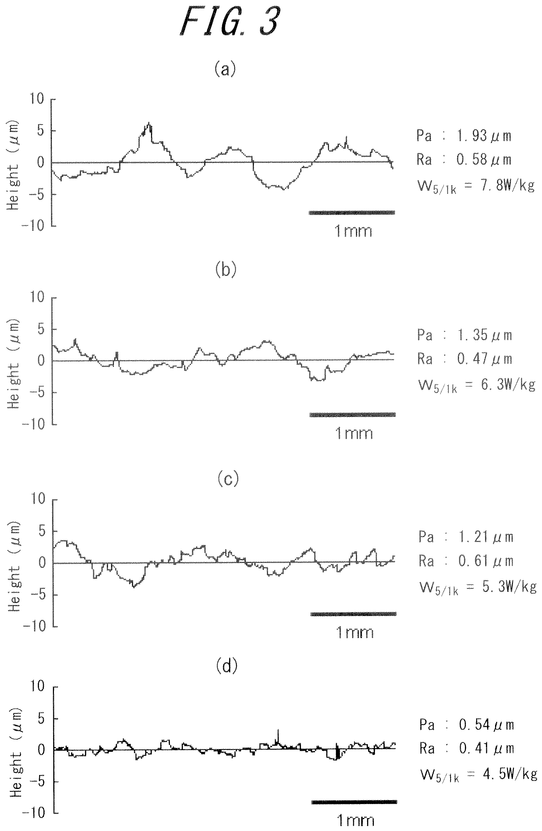

Figs. 3(a) to 3(d) show part of the results of investigation relating to the surface roughness of the samples obtained by the present experiment, indicating the measured values of the profile roughness Pa and the arithmetical mean roughness Ra as the surface roughness besides the values of the iron loss W_{5/1k}. With reference to the relationship between the profile roughness Pa and the iron loss W_{5/1k}, similarly to Fig. 2, Figs. 3(a) to 3(d) show that Pa is well correlated to W_{5/1k}, namely W_{5/1k} decreases, as Pa is made smaller. By contrast, regarding the relationship between the arithmetical mean roughness Ra and the iron loss W_{5/1k}, it has been clarified by comparing Figs. 3 (a) and (c), that even though Fig. 3(c) shows Ra as 0.61 µm, while Fig. 3(a) shows smaller Ra as 0.58 µm, Fig. 3(a) shows higher W_{5/1k} of 7.8W/kg as compared with W_{5/1k} of5.3W/kg shown in Fig. 3 (c). Therefore, in the case of a thin steel sheet with waviness being recognized, taking into account a primary profile, the profile roughness Pa is considered to be more suitable as a parameter indicating the surface texture than the generally adopted arithmetical mean roughness Ra.

As shown in Fig. 1, the longer the siliconizing time is, the smaller the profile roughness Pa becomes, that is, waviness becomes smaller. The reason for this is not yet fully clarified, though the inventors consider as follows:
Namely, upon the siliconizing treatment using silicon tetrachloride, it is considered that the following reaction occurs:

SiCl₄ + 5Fe → Fe₃Si + 2FeCl₂

Namely, Fe is partly replaced by Si and discharged outside the system as the gas chloride. On this occasion, on the steel sheet surface where the reaction is in progress by replacing Si that is small in volume, a volume shrinkage is considered to occur. The total amount of this volume shrinkage remains the same as far as the final amount treated by siliconizing is the same, though the volume varies more significantly per unit time as the annealing time is made shorter. When the volume varies rapidly per unit time, this might be a factor causing waviness in steel sheets.

In this instance, what is important for the present invention is that deterioration of the magnetic property is caused primarily by the waviness in steel sheets, rather than the length of annealing time. Namely, even when the annealing time is short, if the steel sheet is free from waviness, it may be considered that the magnetic property would not deteriorate. There may be considered various methods for preventing the waviness and reducing the profile roughness Pa, e.g., decreasing the line tension applied during the sheet passage for preventing deflection upon the siliconizing treatment, carrying out siliconizing treatment intermittently, as well as placing the steel sheets along supporting rolls upon the siliconizing treatment.

By the way, upon industrial manufacturing of the electrical steel sheets, it is undesirable to extend the annealing time as was done in the present experiment, since extended annealing time results in lowering of the productivity. Among the methods as noted above, the method decreasing the line tension was applied to find out that the tendency to reduce the arithmetical mean roughness Ra was confirmed, though the tendency to decrease the profile roughness Pa could not always be recognized. It is assumed that decreasing the line tension caused also decreasing the tensile force in the sheet widthwise direction, which could not thus improve the waviness in steel sheets. In addition, as explained with reference to the examples to be described below, when it is difficult to take longer annealing times for practical reasons, it is preferred to apply a plurality of methods, for instance, in addition to decreasing the line tension, an atmosphere for the siliconizing treatment may be applied intermittently to the steel sheets.

Also, upon industrial manufacturing of the electrical steel sheets, the waviness in the steel sheets are mostly formed in parallel to the rolling direction, under the influence of the line tension applied during the siliconizing treatment. Thus, in measuring the profile roughness Pa linearly, it is necessary to carry out the measurements in the direction perpendicular to the rolling direction. Hence, the measurement as discussed herein was carried out in the direction perpendicular to the rolling direction.

As described above, the inventors determined the cause for the concern that during siliconizing thin electrical steel sheets using SiCl₄ in order to increase the Si content in the steel, the magnetic property deteriorates and the stacking factor decreases, and succeeded to eliminate such problems by regulating the causal factors based on the profile roughness Pa. The present invention is based on the novel recognition as described above.

That is, the primary features of the present invention are as follows:
A first aspect of the present invention resides in an ultra-thin electrical steel sheet having a component composition including, by mass%:
C: 0.007 % or less,
Si: 4 % to 10 %, and
Mn: 0.005 % to 1.0 %,
the balance being Fe and incidental impurities,
wherein the electrical steel sheet has a sheet thickness within a range of 0.01 mm or more to 0.10 mm or less, and a profile roughness Pa of 1.0 µm or less.

A second aspect of the present invention resides in an ultra-thin electrical steel sheet according to the first aspect, further including, by mass%, at least one of Ni: 0.010 % to 1.50 %, Cr: 0.01 % to 0.50 %, Cu: 0.01 % to 0.50 %. P: 0.005 % to 0.50 %, Sn: 0.005 % to 0.50 %, Sb: 0.005 % to 0.50 %, Bi: 0.005 % to 0.50 %. Mo: 0.005 % to 0.100 %, and Al: 0.02 % to 6.0 %.

### (Advantageous Effects of Invention)

According to the present invention, it is possible to advantageously avoid deterioration of the magnetic property and decrease in the stacking factor, which had been conventionally caused in thin electrical steel sheets during the siliconizing treatment by means of SiCl₄ for increasing the Si content in the steel, and to thereby stably obtain an ultra-thin electrical steel sheet excellent in magnetic property.

### BRIEF DESCRIPTION OF DRAWINGS

The present invention will be described below in further detail, with reference to the drawings, wherein:
Fig. 1 shows the relationship between the siliconizing treatment time and the iron loss W_{5/1k};
Fig. 2 shows the relationship between the profile roughness Pa of a steel sheet and the iron loss W_{5/1k};
Figs. 3 show primary profiles obtained by measuring the roughness, together with the profile roughness Pa, the arithmetical mean roughness Ra and the iron loss W_{5/1k}; and
Figs. 4 show arrangements of blowing nozzles and shield plates that are utilized during the intermittent or continuous siliconizing treatments at a continuous line.

### DESCRIPTION OF EMBODIMENTS

The steel sheet according to the present invention has a specific component composition which is limited to the above range for the reasons to be described below, where the unit "%" relating to the following component elements refers to "mass%" unless specified otherwise.

### C: C ≤ 0.007 %

Carbon (C) is an element giving rise to deterioration of magnetic property due to magnetic aging, thus C is preferably reduced as best as possible. However, it is difficult to remove C completely, thus enormous production cost shall be necessary for achieving the complete removal of C. Therefore, C content is defined to be 0.007 % or less. As far as C content stays not exceeding the aforementioned limit, C does not cause any problem in terms of the magnetic property.

### Si: 4 % ≤ Si ≤ 10 %

In light of final product sheets, Silicon (Si) is an element necessary for enhancing steel specific resistance and improving iron loss. As the present invention presupposes the siliconizing treatment, Si content needs to be 4 % or more. On the other hand, if Si content exceeds 10 %, saturation magnetic flux density decreases significantly. Therefore, Si content is defined to be within a range of 4 % to 10 %.

### Mn: 0.005 % ≤ Mn ≤ 1.0 %

Manganese (Mn) is an element contributing effectively to improving workability during hot rolling. However, if Mn content is less than 0.005 %, the effect for improving workability is small. On the other hand, Mn content in excess of 1.0 % has saturation magnetic flux density decreased and thus magnetic property deteriorates also. Therefore, Mn content is defined to be within a range of 0.005 % to 1.0 %.

In addition to the aforementioned basic components, the steel sheet of the present invention may also include at least one of the elements stated below in an appropriate manner as necessary, that is; Ni: 0.010 % to 1.50 %,Cr: 0.01 % to 0.50 %, Cu: 0.01 % to 0.50 %. P: 0.005 % to 0.50 %, Sn: 0.005 % to 0.50 %, Sb: 0.005 % to 0.50 %, Bi: 0.005 % to 0.50 %, Mo: 0.005 % to 0.100 % and Al: 0.02 % to 6.0 %.

Namely, Nickel (Ni) can be added for improving magnetic property.
However, if Ni content is less than 0.010 %, an improved amount of magnetic property is small. On the other hand, Ni content in excess of 1.50 % causes decline in saturation magnetic flux density, causing deterioration of magnetic property. Therefore, Ni content is defined to be within a range of 0.010 % to 1.50 %.
Also, in order to decrease iron loss, the followings can be added singly or complexly, that is: Cr: 0.01 % to 0.50 %, Cu: 0.01 % to 0.50 %, P: 0.005 % to 0.50 % and Al: 0.02 % to 6.0 %.
Moreover, in order to improve magnetic flux density, the followings can be added singly or complexly, that is; Sn: 0.005 % to 0.50 %, Sb: 0.005 % to 0.50 %, Bi: 0.005 % to 0.50 % and Mo: 0.005 % to 0.100 %. Each addition of amount less than the lower limit amount cannot sufficiently cause the good effect of improving magnetic property. On the other hand, each addition of amount in excess of the upper limit amount has saturation magnetic flux density decreased, thus causing deterioration of magnetic property.

Next, in the electrical steel sheet according to the present invention, reasons why sheet thickness and profile roughness Pa are to be restricted as above will be described hereinafter.

### Sheet thickness: 0.01 mm ≤ Sheet thickness ≤ 0.10 mm

Deterioration of magnetic property due to the surface roughness of the steel sheet, an issue of the present invention, occurs to thin steel sheets significantly. Thus, in the present invention, a sheet thickness of the electrical steel sheet is restricted to be 0.10 mm or less. However, the sheet thickness less than 0.01 mm causes difficulty during sheet passage at siliconizing treatment facilities. Therefore, the sheet thickness is defined to be 0.01 mm or more.

### Profile Roughness Pa: Pa ≤ 1.0 µm

As described above, the magnetic property of the ultra-thin electrical steel sheet according to the present invention is very closely correlated to the profile roughness Pa, thus it is possible to obtain an excellent magnetic property by decreasing Pa to 1.0 µm or less. Therefore, the surface roughness of the steel sheet is restricted as the profile roughness Pa of 1.0 µm or less. preferably 0.4 µm or less, more preferably 0.3 µm or less.

Next, the preferable manufacturing method of the steel sheet according to the present invention will be described.
To the present invention, manufacturing methods of general electrical steel sheets can be applicable. Namely the method is as follows; molten steel adjusted in composition thereof as prescribed is processed for manufacturing the corresponding steel slab, which is subjected to hot rolling to obtain hot rolled steel sheets. The hot rolled steel sheets obtained are then subjected to hot-band annealing as necessary, subjected to cold rolling once, or twice or more with an intermediate annealing performed therebetween for obtaining cold rolled steel sheets having the final sheet thickness. The cold rolled steel sheets obtained are subsequently subjected to annealing as necessary, siliconizing treatment and then coating process.

According to the present invention, during the above mentioned processes, the siliconizing treatment utilizing SiCl₄ is essential. In addition, cold rolling, primary recrystallization annealing and secondary recrystallization annealing, as well as removing hard coating from the surface of the steel sheet and subsequent siliconizing treatment, are especially desirable, as making it possible to obtain the high magnetic flux density property. In this case, re-rolling may be carried out for obtaining a prescribed sheet thickness after removal of the hard coating and before the siliconizing treatment, in order to maintain the high magnetic flux density.

Hereinafter the production steps will be described concretely. Molten steel having the above component composition may be subjected to the conventional ingot-making or continuous casting methods for obtaining slab. Or a thin cast slab/strip having a thickness of 100 mm or less may be prepared by direct casting. The slab may be heated by conventional methods for hot rolling or directly brought to hot rolling after casting wihtout heating. The thin cast slab/strip may be either hot rolled or directly fed to the next process skipping hot rolling. In light of cost aspect, it is preferable that a slab heating temperature before hot rolling is a low temperature of 1250 °C or less. But in case of utilizing secondary recrystallization, the slab shall be preferably heated up to a temperature of 1400 °C approximately.

Subsequently, the hot rolled steel sheets obtained are subjected to hot-band annealing as necessary. In order to obtain a good magnetic property, the hot-band annealing temperature is preferably within a range of 800 °C or more to 1150 °C or less. When the hot-band annealing temperature is lower than 800 °C, band structure derived from hot rolling is retained, it is thereby difficult to realize primary recrystallized structure constituted of uniformly-sized grains, thus the magnetic property deteriorates. On the other hand, in case of the hot-band annealing temeperature exceeding 1150 °C, grains in the steel sheets after hot-band annealing are exceedingly coarsened, which is very disadvantageous in terms of realizing primary recrystallized structure consititution of uniformly-sized grains.

After the above hot-band annealing, the hot rolled steel sheets are subjected to cold rolling once, or twice or more with an intermediate annealing performed therebetween, subsequent annealing as necessary and then siliconizing treatment. It is effective for improving magnetic property to execute cold rolling at a high temperature within a range of 100 °C to 300 °C and also to implement an aging treatment once, or more than once at a temperature within a range of 100 °C to 300 °C in the middle of cold rolling. It is preferred to carry out siliconizing treatement at a high temperature of 1200 °C approximately. However, as earlier mentioned, for the case where waviness occurs in steel sheets, the temperature of siliconizing treatment can be decreased without problem. Also, as the means to decrease waviness in steel sheets and to reduce profile roughness Pa, besides prolonging annealing time, there are methods such as executing intermittent siliconizing treatment, applying supporting rolls and reducing line tension, however these method are not limited in the present invention.

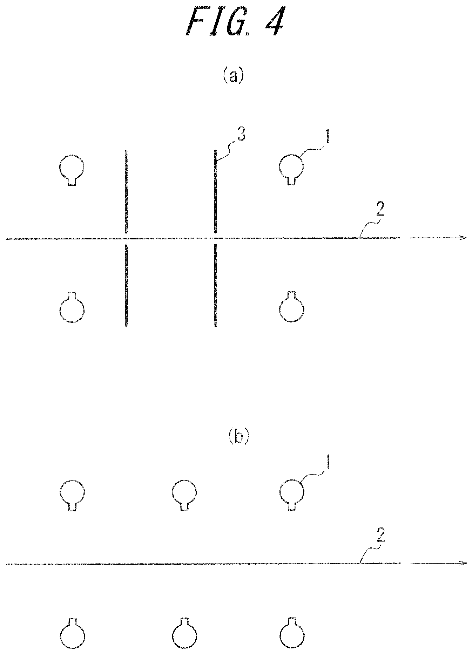

In the experiment executed for the present invention, it was clarified that Pa could not be reduced readily. Thus it is considered to be necessary that during intermittent siliconizing treatment at least by controlling an atmosphere, also line tension is decreased.
Here, the term "intermittent siliconizing treatment" means that, during siliconizing treatment, atmosphere suitable for siliconization is intermittently applied, alternatingly to atmosphere that does not contribute to siliconization. Concretely, in case of siliconizing at a continuous line, there is a method as shown in Fig. 4 (a), namely, a plurality of nozzles 1 are arranged in the direction of sheet passage of a steel sheet 2 for blasting source gas for siliconizing and a pair of shield plates 3 are provided between these nozzles for shielding the source gas from the nozzles 1 in order to prevent siliconizing between the pair of the shield plates.

In addition, when siliconizing treatment time is shortened, the steel sheet with different Si contents between a surface layer and a central layer in sheet thickness is obtained, which is preferred, because magnetic property thus becomes good in high frequency excitation. Also in this case, a component composition should be considered as values averaged within a whole sheet thickness. After the siliconizing treatment, it is effective for a case utilized under a stacked condition, to provide insulating coating for ensuring insulation property of steel sheets.

### <Example 1>

Steel slab having the component composition including C: 0.0031 %, Si: 3.05 %, Mn: 0.15 %, the balance being Fe and incidental impurities, was manufactured by continuous casting. The steel slab obtained was subjected to heating at a temperature of 1150 °C and hot rolling to obtain hot rolled steel sheets having a sheet thickness of 2.0 mm. Subsequently, the hot rolled steel sheets were subjected to hot-band annealing at a temperature of 1000 °C for 30 sec, cold rolling for obtaining the final sheet thickness of 0.075 mm, and then siliconizing treatment in the atmosphere of 10 % SiCl₄ + 90 % Ar at a temperature of 1100 °C for 600 sec. At that time, in the annealing furnace, as shown in Fig. 4 (a), a plurality of nozzles 1 were arranged near both sides of a steel sheet 2 for blasting source gas, and also a pair of shield plates 3 shielding source gas were provided between the nozzles for executing the siliconizing treatment by means of the source gas near the nozzles 1, while for preventing siliconizing between the shield plates 3, thus executing the intermittent siliconizing treatment. For some samples, as shown in Fig. 4 (b), the siliconizing treatment was executed without the shield plates for executing the continuous siliconizing treatment by a plurality of nozzles 1. In addition, line tensions at sheet passage during the siliconizing treatments were changed variously according to Table 1.
Si contents of the sample obtained were 5.54 %, which were distributed substantially uniformly in the direction of sheet thickness.
Moreover, the magnetic properties and stacking factors thereof were measured by the method as prescribed by JIS C 2550 and also the profile roughness Pa was measured in conformity to the regulations as prescribed by JIS B 0633 '01.
The results obtained are also shown in Table 1.

**[Table 1]**

| No. | Line tension (MPa) | Type of siliconizing treatment | Profile roughness (Pa) (µm) | Iron loss W_{5/1k} (W/kg) | Stacking factor (%) | Remarks |
|---|---|---|---|---|---|---|
| 1 | 0.5 | Intermittent | 0.18 | 5.7 | 99.2 | Inventive example |
| 2 | 1.0 | Intermittent | 0.27 | 5.9 | 98,6 | Inventive example |
| 3 | 2.5 | Intermittent | 0.55 | 6.5 | 96.5 | Inventive example |
| 4 | 5.0 | Intermittent | 1,56 | 10.2 | 89.8 | Comparative example |
| 5 | 1.0 | Continuous | 1.22 | 8.1 | 91.0 | Comparative example |

It is apparent from Table 1 that the magnetic properties are good as well as the stacking factors are high in the case of decreasing the line tensions and executing the intermittent siliconizing treatments for adjusting the profile roughness Pa within the appropriate range of the present invention.

### <Example 2>

Steel slabs having the various component compositions as shown in Table 2 were manufactured by continuous casting. The steel slabs obtained were subjected to heating at a temperature of 1200 °C and hot rolling to obtain hot rolled steel sheets having a sheet thickness of 2.7 mm. Subsequently, the hot rolled steel sheets were subjected to hot-band annealing at a temperature of 900 °C for 30 sec, cold rolling for obtaining the final sheet thickness of 0.050 mm, and then siliconizing treatment in the atmosphere of 15 % SiCl₄ + 85 % N₂ at a temperature of 1200 °C for 100 sec. At that time, in the annealing furnace as shown in Fig. 4 (a), a plurality of nozzles 1 were arranged near both sides of a steel sheet 2 for blasting source gas, and also a pair of shield plates 3 shielding source gas were provided between the nozzles for executing the siliconizing treatment by means of the source gas near the nozzles 1, while for preventing siliconizing between the shield plates 3, thus executing the intermittent siliconizing treatment. The line tension at sheet passage was defined to be 1.0 MPa and thus both of the above countermeasures were considered to be the conditions for decreasing waviness in steel sheets.
The profile roughness Pa of the samples obtained were measured in conformity to the regulations as defined by JIS B 0633 '01, and as a result, the profile roughness Pa thereof were within a range of 0.25 µm to 0.36 µm, which achieved the appropriate range according to the present invention. In addition, the magnetic properties of the samples obtained were measured by the method as prescribed in JIS C 2550 as well as the final components in the steel were analyzed.
The results obtained are also shown in Table 2.

**[Table 2]**

| No. | Component composition (mass%) | | | | W_{5/1k} (W/kg) | Remarks |
|---|---|---|---|---|---|---|
| | C | Si | Mn | Others | | |
| 1 | 0.004 | 6.54 | 0.06 | - | 5.7 | Inventive example |
| 2 | 0.005 | 3.42 | 0.07 | - | 11.4 | Comparative example |
| 3 | 0.003 | 5.56 | 0.09 | - | 4.5 | inventive example |
| 4 | 0.003 | 4.22 | 0.12 | Sb: 0.04 | 4.9 | inventive example |
| 5 | 0,003 | 8.65 | 0.25 | P : 0.008, Ni: 0.12 | 5.1 | inventive example |
| 6 | 0.004 | 5.55 | 0.08 | Al: 3.1 | 3.2 | Inventive example |
| 7 | 0.004 | 6.50 | 0.45 | Cr: 0.05, Bi: 0.12 | 4.9 | Inventive example |
| 8 | 0.002 | 6.49 | 0.01 | Cu: 0.02, Sn: 0.12, Mo: 0.06 | 4.3 | Inventive example |

It is apparent from Table 2 that all the inventive examples satisfying the component compositions range according to the present invention achieve the excellent magnetic properties.

### INDUSTRIAL APPLICABILITY

The thin electrical steel sheet having high Si content according to the present invention is particularly excellent in high frequency iron loss, which can be thus suitably applied to materials for iron cores of small-sized transformers, motors, reactors, etc.

### REFERENCE NUMERALS

- 1: Nozzles
- 2: Steel sheet
- 3: Shield plates

## Claims

1. An ultra-thin electrical steel sheet having a component composition consisting of, by mass%:
C: 0.007 % or less,
Si: 4 % to 10 %, and
Mn: 0.005 % to 1.0 %, and optionally further consisting of, by mass%, at least one of Ni: 0.010 % to 1.50 %, Cr: 0.01 % to 0.50 %, Cu: 0.01 % to 0.50 %, P: 0.005 % to 0.50 %, Sn: 0.005 % to 0.50 %, Sb: 0.005 % to 0.50 %, Bi: 0.005 % to 0.50 %, Mo: 0.005 % to 0.100 %, and Al: 0.02 % to 6.0 %,
the balance being Fe and incidental impurities,
wherein the electrical steel sheet has a sheet thickness within a range of 0.01 mm or more to 0.10 mm or less, and a profile roughness Pa of 1.0 µm or less, the term "profile roughness Pa" meaning the arithmetical mean deviation of the assessed profile, the assessed profile being the primary profile, as prescribed by JIS B 0601 : 2001.

## Patentansprüche

1. Ultradünnes Elektrostahlblech, das eine Komponenten-Zusammensetzung hat, die in Masse-% besteht aus:
C: 0,007 % oder weniger,
Si: 4 % bis 10 %, sowie
Mn: 0,005 % bis 1,0 %,
und die des Weiteren optional in Masse-% aus 0,010 % bis 1,50 % Ni, 0,01 % bis 0,50 % Cr, 0,01 % bis 0,50 % Cu, 0,005 % bis 0,50 % P, 0,005 % bis 0,50 % Sn, 0,005 % bis 0,50 % Sb, 0,005 % bis 0,50 % Bi, 0,005 % bis 0,100 % Mo oder/und 0,02 % bis 6,0 % Al besteht,
wobei der Rest Fe und zufällige Verunreinigungen sind,
und das Elektrostahlblech eine Blechdicke innerhalb eines Bereiches von 0,01 mm oder mehr bis 0,10 mm oder weniger sowie eine Profil-Rauigkeit von 1,0 µm oder weniger hat und dabei der Terminus "Profil-Rauigkeit", wie von JIS B 0601: 2001 vorgeschrieben, den arithmetischen Mittenrauwert des bewerteten Profils bezeichnet, wobei das bewertete Profil das primäre Profil ist.

## Revendications

1. Tôle d'acier magnétique ultrafine présentant une composition en composants constituée, en % en masse de:
C : de 0,007 % ou moins,
Si : de 4 % à 10 %, et
Mn : de 0,005 % à 1,0 %, et consistant en outre en option, en % en masse, de Ni : de 0,010 % à 1,50 %, Cr : de 0,01 % à 0,50 %, Cu : de 0,01 % à 0,50 %, P : de 0,005 % à 0,50 %, Sn : de 0,005 % à 0,50 %, Sb : de 0,005 % à 0,50 %, Bi : de 0,005 % à 0,50 %, Mo : de 0,005 % à 0,100 % et Al : de 0,02 % à 6,0 %,
le reste incluant du Fe et des impuretés secondaires,
où la tôle d'acier magnétique présente une épaisseur de tôle située dans la plage allant de 0,01 mm ou plus à 0,10 mm ou moins, et une rugosité de profil Pa de 1,0 µm ou moins, la terminologie « rugosité de profil Pa » indiquant l'écart moyen arithmétique du profil évalué, le profil évalué étant le profil principal tel qu'il est prescrit par la norme JIS B 0601 : 2001.
